(19) Europäisches Patentamt
European Patent Office
Office européen des brevets

(11) **EP 2 808 721 B1**

(12) **EUROPÄISCHE PATENTSCHRIFT**

(45) Veröffentlichungstag und Bekanntmachung des Hinweises auf die Patenterteilung:
**25.10.2023 Patentblatt 2023/43**

(21) Anmeldenummer: **14170444.5**

(22) Anmeldetag: **28.05.2014**

(51) Internationale Patentklassifikation (IPC):
**G02B 26/08** *(2006.01)* **B81B 3/00** *(2006.01)*

(52) Gemeinsame Patentklassifikation (CPC):
**G02B 26/0858**

(54) **Vorrichtung mit einer Feder und einem daran aufgehängten optischen Element**

Device with a spring and a suspended optical element

Dispositif doté d'un ressort et d'un élément optique suspendu à celui-ci

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2013 DE 102013210059**

(43) Veröffentlichungstag der Anmeldung:
**03.12.2014 Patentblatt 2014/49**

(73) Patentinhaber: **Fraunhofer-Gesellschaft zur Förderung der angewandten Forschung e.V.**
**80686 München (DE)**

(72) Erfinder:
• **Gu-Stoppel, Shanshan**
 **25524 Itzehoe (DE)**
• **Kaden, Dirk**
 **25335 Elmshorn (DE)**

• **Eisermann, Christian**
 **25336 Elmshorn (DE)**

(74) Vertreter: **Schenk, Markus**
**Schoppe, Zimmermann, Stöckeler Zinkler, Schenk & Partner mbB Patentanwälte**
**Radlkoferstrasse 2**
**81373 München (DE)**

(56) Entgegenhaltungen:
**US-A1- 2004 012 060     US-A1- 2004 160 118**
**US-A1- 2008 165 402     US-A1- 2010 097 681**
**US-A1- 2010 277 783     US-B1- 6 830 944**

• **UMER IZHAR; BOON S. OOI; SVETLANA TATIC-LUCIC: "Multi-axis micromirror for optical coherence tomography", PROCEDIA CEMISTRY, vol. 1, no. 1, September 2009 (2009-09), pages 1,147-1.150,**

**Beschreibung**

Die vorliegende Erfindung bezieht sich auf eine Vorrichtung mit einem optischen Element, welches über Federn an Aktuatoren verkippbar gelagert ist.

Bimorph-Aktuatoren bestehen typischerweise aus einer aktiven und einer passiven Schicht, wobei die Aktuatoren unterschiedliche, beispielsweise thermische oder piezoelektrische, Ausdehnung- oder Kontraktionseigenschaften der Schichtmaterialien nutzen, um Auslenkungen der Aktuatoren zu bewirken.

Systeme mit Bimorph-Aktuatoren und einem um eine Achse quasi-statisch und mit großen Auslenkungen verkippbaren optischen Element, bspw. ein Mikrospiegel, benötigen in den meisten Fällen sehr große Bauteilflächen des Systems, da die Auslenkung solcher Bimorph-Aktuatoren und mithin die Auslenkung des optischen Elementes unter anderem von der Länge der Aktuatoren abhängig ist. Ein um zwei senkrecht zueinander stehende Torsionsachsen ausgelenktes optisches Element weist einen noch höheren Flächenbedarf auf, da zusätzliche Aktuatoren angeordnet werden. Ein höherer Flächenbedarf ist für MEMS-Bauteile ein erheblicher Nachteil.

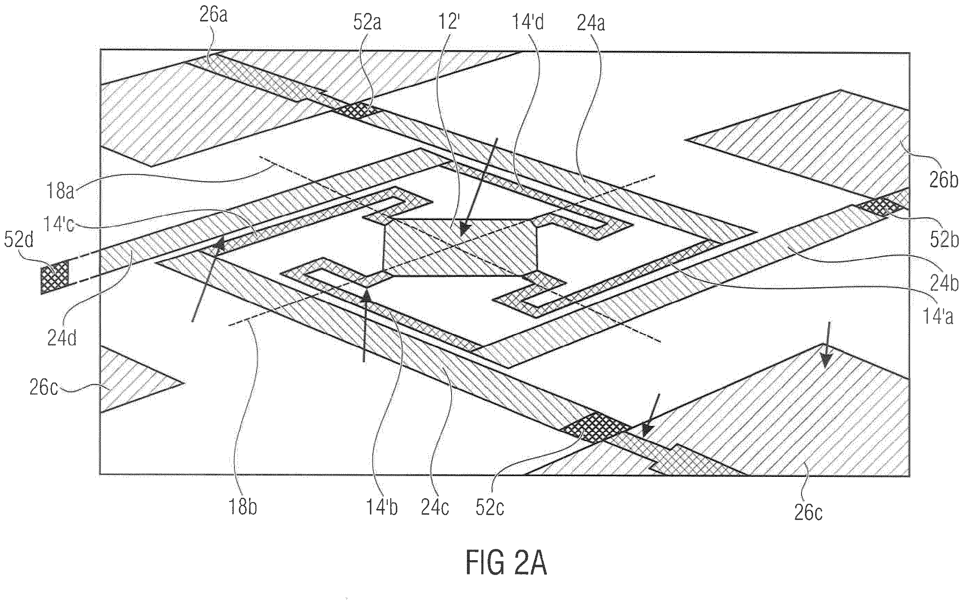

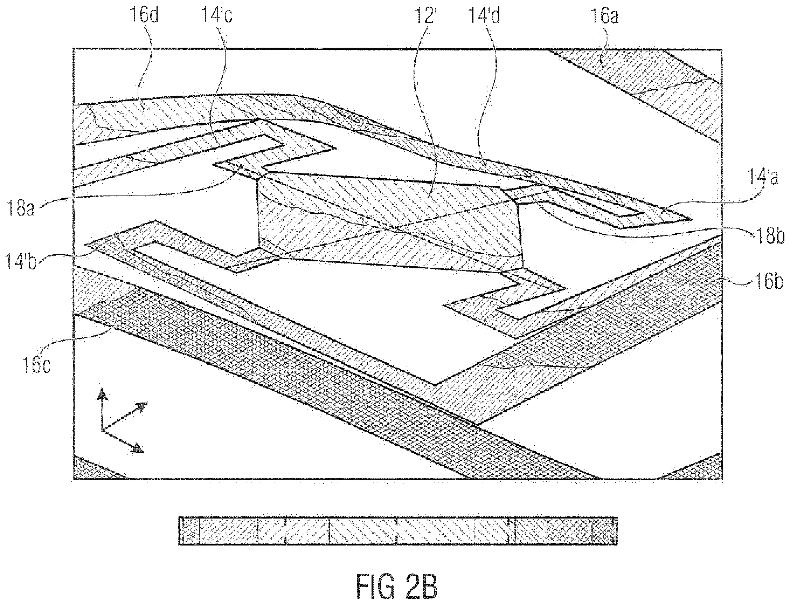

Eine Ausführungsform eines Mikrospiegels mit zwei senkrecht zueinander stehenden Torsionsachsen, welcher in beiden Torsionsachsen bzw. den resultierenden Drehbewegungen quasi-statisch betrieben wird, ist in den Fig. 2a und 2b für thermisch auslenkbare Aktuatoren dargestellt und ist beispielsweise auch für piezoelektrisch auslenkbare Aktuatoren nutzbar.

Fig 2a zeigt eine Vorrichtung mit einem optischen Element 12', welches über vier mehrfach geknickte Federn 14'a-d an vier senkrecht zu einander angeordneten Aktuatoren 16a-d um die Torsionsachsen 18a und 18b verkippbar aufgehängt ist. An den Aktuatoren 16a-d sind Heizelemente 52a-d angeordnet, welche ausgebildet sind, um die Aktuatoren 16a-d lokal zu erwärmen, wobei lokal variierende thermische Ausdehnungskoeffizienten von Aktuatorschichten, bei einer Erwärmung der Aktuatoren 16a-d zu einer Auslenkung der Aktuatoren 16a-d und mithin zu einer Auslenkung des optischen Elementes 12' führen.

Die Auslegung erlaubt relativ große Kippwinkel des optischen Elementes 12', jedoch sind die Aktuatoren 16a-d in Relation zu Kantenlängen des optischen Elementes 12' lang ausgebildet, was den Flächenbedarf der Aktuatoren und mithin der Vorrichtung steigert. Zusätzlich weisen die Federn 14'a-d eine große axiale Ausdehnung auf. Insgesamt ist die Flächeneffizienz der Vorrichtung niedrig. Da eine Vergrößerung einer optischen Wirkfläche des optischen Elementes 12' mit ebenso vergrößerten Aktuatoren 16a-d und Federn 14'a-d einhergeht, ist dieses Design für optische Elemente mit großen Flächen ungeeignet.

Fig. 2b zeigt die Vorrichtung aus Fig. 2a in einem ausgelenkten Zustand. Die Aktuatoren 16a-d sind derart ausgelenkt, dass das optische Element 12' um die Torsionsachse 18a verkippt ist.

Der Aufbau dieser Vorrichtung ist in [1] für eine optische Kohärenztomographie beschrieben.

In US 2008/0165402 A1 ist ein Aktuator mit einer beweglichen Platte, einem Träger zum Tragen der beweglichen Platte beschrieben. Verbindungseinrichtungen zum Verbinden der beweglichen Platte und des Trägers ermöglichen eine Rotation der beweglichen Platte relativ zum Träger.

Wünschenswert wäre demnach eine Vorrichtung, die mit einer großen Flächeneffizienz eine Verkippung von großen optischen Elementen erlaubt und einen kompakten Aufbau ermöglicht.

Die Aufgabe der vorliegenden Erfindung besteht deshalb darin, eine Vorrichtung bereitzustellen, bei der ein Element über Federn in zwei Richtungen verkippbar gelagert ist und die einen effizienteren Betrieb erlaubt.

Diese Aufgabe wird durch den Gegenstand der unabhängigen Patentansprüche gelöst.

Der Kerngedanke der vorliegenden Erfindung besteht deshalb darin, erkannt zu haben, dass obige Aufgabe sowohl dadurch gelöst werden kann, dass ein optisches Element an genau zwei optikseiteigen Anbringungsbereichen über Federn an Aktuatoren um eine erste und eine zweite Achse verkippbar gelagert ist, als auch indem ein optisches Element über vier optikseitige Anbringungsbereiche über Federn an Aktuatoren um zwei Achsen verkippbar gelagert ist, wobei je eine Feder mit einem Winkel zwischen 90° und 180° an einem Aktuator angeordnet ist.

Gemäß einem Ausführungsbeispiel wird eine Vorrichtung mit einem ersten Aktuator; einem zweiten Aktuator; einem dritten Aktuator; einem vierten Aktuator; und einem optischen Element; bereitgestellt. Zumindest eine erste Feder ist zwischen dem ersten Aktuator und einem dem ersten Aktuator zugeordneten ersten optikseitigen Anbringungsbereich an einem Umfang des optischen Elements angeordnet ist. Zumindest eine zweite Feder, ist zwischen dem zweiten Aktuator und einem dem zweiten Aktuator zugeordneten zweiten optikseitigen Anbringungsbereich an dem Umfang des optischen Elements angeordnet. Zumindest eine dritte Feder ist zwischen dem dritten Aktuator und einem dem dritten Aktuator zugeordneten dritten optikseitigen Anbringungsbereich an dem Umfang des optischen Elements angeordnet ist. Zumindest eine vierte Feder ist zwischen dem vierten Aktuator und einem dem vierten Aktuator zugeordneten vierten optikseitigen Anbringungsbereich an dem Umfang des optischen Elements angeordnet. Jede der ersten bis vierten Feder ist unter einem Winkel zu der Erstreckungsrichtung des zugeordneten Aktuators, der größer ist als 90° und kleiner ist als 180°, angeordnet ist. Ferner umfasst ein Verlauf der Federn entlang der axialen Ausdehnung eine Krümmung; wobei die Feder innerhalb eines Bereichs verläuft, der durch Kreisbögen definiert ist, die das erste und das zweite Ende der Feder schneiden; wobei jeder Kreisbogen einen Radius umfasst, der größer ist als das 0,75-fache eines Abstandes zwischen dem ersten Ende und dem zweiten Ende der Feder; und wobei jeder Kreisbogen einen Mittelpunkt umfasst, der entlang einer Linie positioniert ist, die senkrecht zu einer Geraden, die das erste Ende und das zweite Ende der Feder mit einander verbindet, im Raum positioniert ist..

Weitere vorteilhafte Ausführungsformen sind Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:

Fig. 1      eine Aufsicht auf eine Vorrichtung mit einem optischen Element, das an zwei optikseitigen Anbringungsbereichen an Aktuatoren verkippbar gelagert ist;

Fig. 2a      eine Aufsicht auf eine Vorrichtung mit einem verkippbar gelagerten optischen Element gemäß dem Stand der Technik;

Fig. 2b      einen ausgelenkten Zustand der Vorrichtung aus Fig. 2a;

Fig. 3      eine schematische Darstellung einer Vorrichtung analog Fig. 1, bei der das optische Element eine größere Entfernung zu einer Einspannung umfasst als aktuatorseitige Anbringungsbereiche;

Fig. 4      eine schematische Seitenschnittansicht einer Feder;

Fig. 5      eine schematische Aufsicht auf eine Vorrichtung, welche Aktuatoren umfasst, die jeweils zwei Aktuatorelemente umfassen;

Fig. 6      eine Aufsicht auf eine Vorrichtung bei der Aktuatoren in einem Winkel zu einander angeordnet sind;

Fig. 7a      eine schematische Seitenschnittansicht eines Aktuators mit einer Funktionsschicht und einem Messelement in einem unausgelenkten Zustand;

Fig. 7b      eine schematische Seitenschnittansicht des Aktuators aus Fig. 7a in einem ausgelenkten Zustand;

Fig. 8      eine Aufsicht auf eine Vorrichtung bei der jeweils zwei Federn an einem optikseitigen Anbringungsort angeordnet sind;

Fig. 9      eine Aufsicht auf eine erfindungsgemäße Vorrichtung mit einem optischen Element und vier Federn, die mit einem Winkel an Aktuatoren angeordnet sind;

Fig. 10      eine Aufsicht auf eine gekrümmte Feder gemäß der vorliegenden Erfindung;

Fig. 11      eine Aufsicht auf eine Feder gemäß der vorliegenden Erfindung mit einer variablen lateralen Ausdehnung;

Fig. 12      eine Aufsicht auf die Vorrichtung aus Fig. 1, die ferner eine Steuereinheit umfasst, die ausgebildet ist, um die Aktuatoren auszulenken;

Fig. 13      eine Aufsicht auf die Vorrichtung aus Fig. 9, die ferner eine Steuereinheit umfasst, die ausgebildet ist, um die Aktuatoren auszulenken.

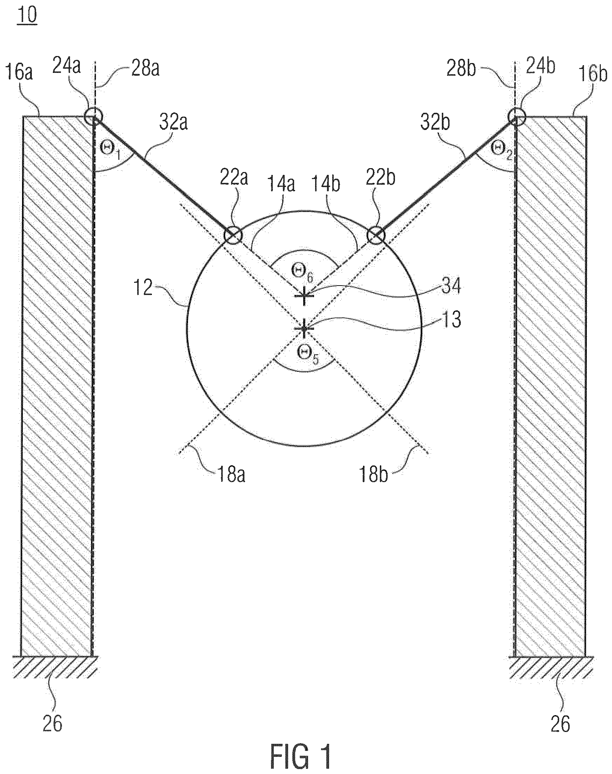

Fig. 1 zeigt eine Vorrichtung 10 mit einem runden optischen Element 12, dessen Hauptseite einen Flächenschwerpunkt 13 umfasst und über Federn 14a und 14b an Aktuatoren 16a und 16b um eine erste Torsionsachse 18a und eine zweite Torsionsachse 18b verkippbar gelagert ist und sich die Torsionsachsen 18a und 18b in einem Winkel $\theta_5$ benachbart zum Flächenschwerpunkt 13 schneiden. Die Federn 14a bzw. 14b sind an einem ersten, dem optischen Element 12 zugewandten Ende an einem optikseitigen Anbringungsbereich 22a bzw. 22b und an einem dem jeweiligen Aktuator 16a bzw. 16b zugewandten zweiten Ende an aktuatorseitigen Anbringungsbereichen 24a bzw. 24b mit dem optischen Element 12 bzw. den Aktuatoren 16a oder 16b verbunden. Die optikseitigen Anbringungsbereiche 22a und 22b umfassen dabei eine laterale Ausdehnung entlang eines Umfangs der Hauptseite des optischen Elementes 12, die jeweils kleiner ist als 10 % des Umfangs der Hauptseite.

Die Aktuatoren 16a und 16b sind an einer Einspannung 26 einseitig fest eingespannt und ausgebildet, um am bei einer Aktuierung am gegenüberliegend zur festen Einspannung 26 angeordneten Ende aus einer Ruhelage heraus ausgelenkt zu werden, wobei eine axiale Ausdehnung der Aktuatoren 16a und 16b größer in etwa dem 2,5-fachen des Durchmessers der Hauptseite des optischen Elementes 12 entspricht.

Die Anzahl der Aktuatoren 16a und 16b entspricht der Anzahl der optikseitigen Anbringungsbereiche 22a und 22b, so dass jeder optikseitige Anbringungsbereich 22a und 22b einem Aktuator 16a und 16b zugeordnet werden kann, mit welchem er über zumindest eine Feder 14a oder 14b verbunden ist.

Der Aktuator 16a umfasst einen Aktuatorverlauf 28a in einer Erstreckungsrichtung von der festen Einspannung 26 ausgehend hin zum aktuatorseitigen Anbringungsbereich 24a. Analog umfasst der Aktuator 16b einen Aktuatorverlauf 28b von der festen Einspannung 26 hin zum aktuatorseitigen Anbringungsbereich 24b. Ein Federverlauf 32a entlang einer axialen Ausdehnung vom ersten zum zweiten Ende der Feder 14a schneidet einen Federverlauf 32b entlang einer axialen Ausdehnung vom ersten zum zweiten Ende der Feder 14b in einem Schnittpunkt 34, der beabstandet vom Flächenschwerpunkt 13 ist mit einem Winkel $\theta_6$ von in etwa 100°. Ein Winkel $\theta_1$ beschreibt eine Ausrichtung der Feder 14a zum Aktuator 16a und mithin den Schnittwinkel der beiden Verläufe 28a und 32a, analog beschreibt ein Winkel $\theta_2$ eine Ausrichtung der Feder 14b zum Aktuator 16b und mithin den Schnittwinkel der beiden Verläufe 28b und 32b.

Der Winkel $\theta_5$, unter welchem sich die Torsionsachsen 18a und 18b schneiden, ist abhängig von einer Federlänge entlang einer axialen Ausdehnung vom ersten Ende hin zum zweiten Ende der Federn 14a bzw.

14b sowie den Winkeln $\theta_1$ und $\theta_2$.

Ein Abstand zwischen dem Schnittpunkt 34 der Federverläufe und dem Flächenschwerpunkt 13 führt dazu, dass effektiv reflektierende Kantenlängen des optischen Elementes 12, die jeweils eine größte Entfernung zweier Punkte des optischen Elementes 12 entlang einer Geraden senkrecht zu einer beliebigen Torsionsachse beschreiben, kürzer sind als geometrische Kantenlängen des optischen Elementes, die eine größte Entfernung zweier beliebiger Punkte innerhalb des optischen Elementes beschreibt, wobei diese Abweichung für eine Aktautorsteuerung in einer Lookup-Tabelle hinterlegt und mithin korrigiert werden kann.

Mit einer in Fig. 1 gezeigten geometrische Anpassung ist eine zweidimensionale Verkippung des optischen Elementes 12 um zwei Torsionsachsen 18a und 18b unter Verwendung lediglich zweier Aktuatoren 16a und 16b.

Eine Auslenkung eines Aktuators 16a bzw. 16b führt zu einer Verkippung des optischen Elementes 12 um die Torsionsachse 18a bzw. 18b. Eine Verkippung des optischen Elementes 12 um die jeweils andere Torsionsachse 18a bzw. 18b kann durch eine geometrische Anpassung der Vorrichtung minimiert werden, wobei der Winkel $\theta_6$ stets kleiner ist als 180°.

Obwohl in Fig. 1 der Schnittpunk 34 innerhalb der Hauptseite des optischen Elementes 12 angeordnet ist, umfassen Ausführungsbeispiele Vorrichtungen, bei denen der Schnittpunkt 34 außerhalb des optischen Elementes 12 angeordnet ist.

Das Ausführungsbeispiel bietet eine hohe Flächeneffizienz für Systeme mit optischen Elementen, die zweidimensionale Torsionsbewegungen und große optische Wirkflächen, bspw. Spiegelflächen erfordern. Die zweidimensionale Bewegung wird durch eine angepasste Aufhängung des optischen Elementes über Federn ermöglicht, so dass die zweidimensionale Bewegung mit lediglich zwei Aktuatoren erzielt werden kann.

Zudem ist das Ausführungsbeispiel auch mechanisch sehr effizient. Da die Auslenkung der Aktuatoren stark von deren Länge abhängig ist, ist eine effiziente Übertragung der Aktuatorauslenkung auf das optische Element vorteilhaft und entscheidend ein das Verhältnis zwischen Verkippungswinkel des optischen Elementes zu benötigten Bauteilflächen des Systems.

Die Verbindungsfedern in einer Vorrichtung mit vier Aktuatoren gemäß dem Stand der Technik müssen häufig lang und teilweise mehrfach gekrümmt ausgeführt sein, da die Bewegung eines mit vier Bezugspunkten verbundenen optischen Elements immer von einen oder von zwei dieser Bezugspunkte beschränkt ist, während das optische Element über die anderen Bezugspunkte ausgelenkt wird. Daher müssen die Feder den auslenkenden Bezugspunkten lange und damit weich sein, um die Bewegung des optischen Elementes zuzulassen. Eine wechselseitige Verkippung des optischen Elementes erfordert somit auch eine entsprechend lange bzw. weiche Ausgestaltung aller Federn. Nachteilig hierbei ist, dass die Auslenkung der Aktuatoren von sehr langen oder geknickten Federn nur in einem reduzierten Umfang übertragen werden kann.

In dem Ausführungsbeispiel der Fig. 1 wird das optische Element dahingegen nur über zwei optikseitige Anbringungsbereiche mit Aktuatoren verbunden, womit die Bewegung des optischen Elementes nicht eingeschränkt wird. Daher können die Federn zwischen Aktuatoren und optischen Element kurz sein, um die Auslenkung der Aktuatoren effizient zu übertagen und die Abmessung sowohl der Aktautoren als auch der Federn zu optimieren, womit eine Flächeneffizienz gegenüber einem unverändert großen optischen Element steigt.

Alternative Ausführungsbeispiele umfassen Aktuatoren, die eine axiale Ausdehnung aufweisen, die größer ist, als der Durchmesser des optischen Elementes und kleiner als das Fünffache des Durchmessers.

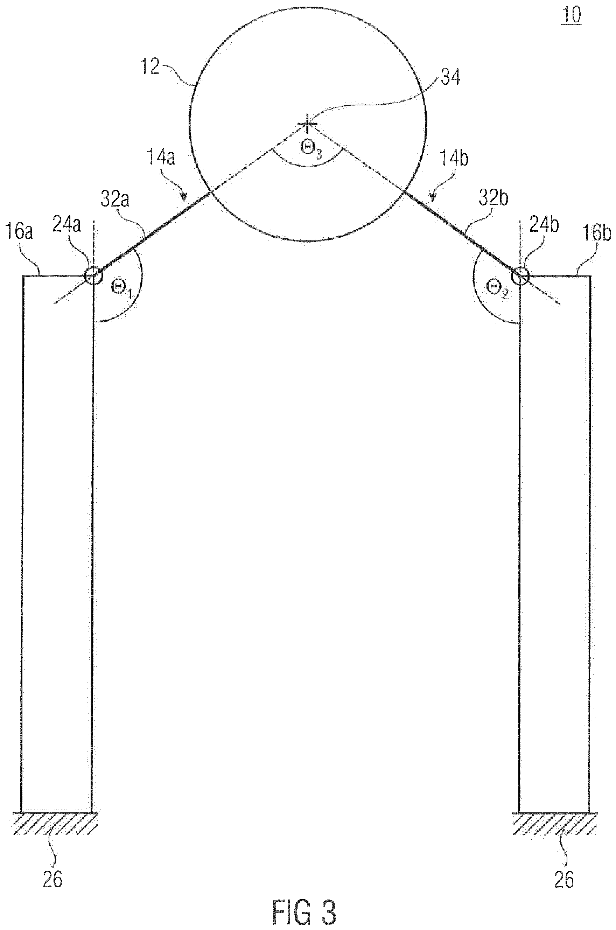

Fig. 3 zeigt Vorrichtung 10 analog Fig. 1, bei der das optische Element 12 mit einem größeren Abstand zur festen Einspannung 26 angeordnet ist, als die aktuatorseitigen Anbringungsbereiche 24a und 24b. Die Winkel $\theta_1$ und $\theta_2$ umfassen die einen Winkel, der größer ist als 90°, wobei der Winkel $\theta_3$ analog Fig. 1 kleiner ist als 180°.

Eine derartige Anordnung des optischen Elementes 12 kann vorteilhaft sein, wenn beispielsweise eine umzulenkende optische Strahlung durch eine Anordnung nach Fig. 1 behindert würde, indem Aktuatoren 16a und 16b optische Transmissionspfade blockieren.

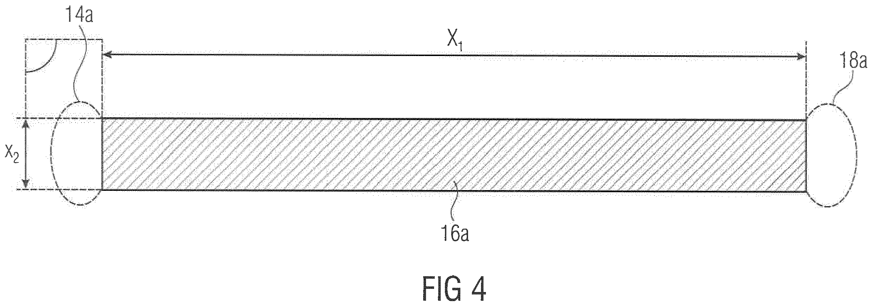

Fig. 4 zeigt eine Aufsicht auf die Feder 14a der Vorrichtung 10 aus Fig. 1. Die Feder 14a umfasst eine axiale Ausdehnung $x_1$ vom ersten Ende zum zweiten Ende der Feder 14a und eine laterale Ausdehnung $x_2$, die zur axialen Ausdehnung $x_1$ senkrecht angeordnet ist. Die laterale Ausdehnung $x_2$ ist kleiner als die axiale Ausdehnung $x_1$ multipliziert mit einem Faktor 0,3, so dass die Feder gegenüber einer lateralen Breite eine große axiale Länge aufweist. Die Ausdehnung $x_1$ ist kleiner als das Doppelte der größten Entfernung zweier beliebiger Punkte einer Hauptseite des optischen Elementes an welcher die Feder 14a angeordnet ist.

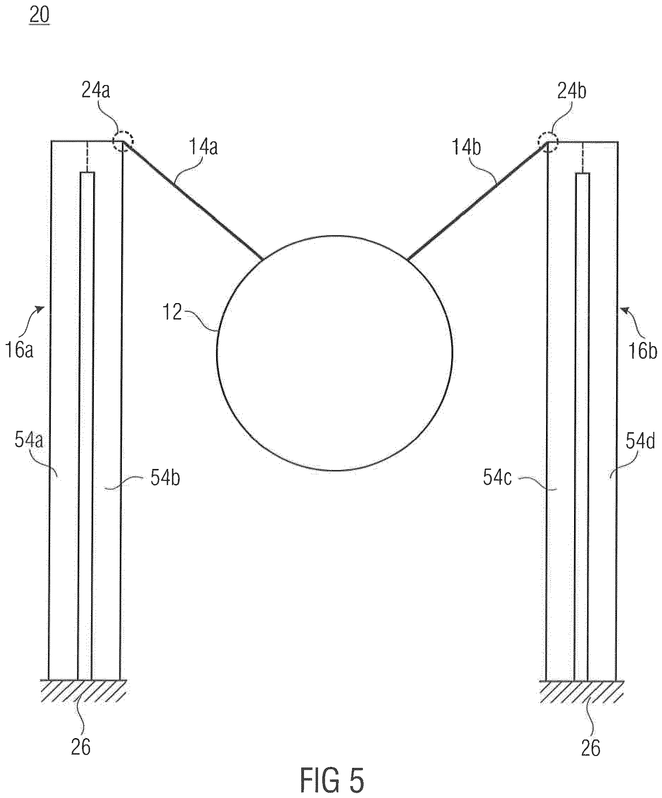

Fig. 5 zeigt eine Vorrichtung 20, bei der die Aktuatoren 16a und 16b jeweils zwei von einander beabstandete Aktuatorelemente 54a und 54b bzw. 54c und 54d umfassen, wobei die Aktuatorelemente 54a und 54b bzw. 54c und 54d am auslenkbaren Ende des Aktuators 16a bzw. 16b mit einander verbunden sind, so dass eine Auslenkung eines der Aktuatorelemente 54a oder 54b bzw. 54c oder 54d zu einer Auslenkung des Aktuators 16a bzw. 16b führt, wobei die jeweiligen Aktuatorelemente 54a und 54b bzw. 54c und 54d eines Aktuators parallel ansteuerbar sind.

Eine Kombination mehrerer Aktuatorelemente 54a-d ermöglicht eine Verringerung von Querkontraktionseffekten in piezoelektrisch betriebenen Aktuatoren, da für jedes Aktuatorelement ein Verhältnis einer Aktuatorlänge zu einer Aktuatorbreite derart optimiert ist.

Alternative Ausführungsbeispiele zeigen Aktuatorelemente, die ohne einen Abstand zueinander angeordnet sind und ein gemeinsames Substrat umfassen, sowie Aktuatorelemente, die getrennt von einander ansteuerbar sind.

Weitere Ausführungsbeispiele zeigen Aktuatoren mit zumindest zwei Aktuatorelementen, wobei von einander verschiedene Aktuatorelemente von einander verschiedene Aktuationsprinzipien nutzen, indem ein Aktuatorelement eine piezoelektrische Funktionsschicht umfasst und ein anderes Aktuatorelement eine thermische Funktionsschicht umfasst.

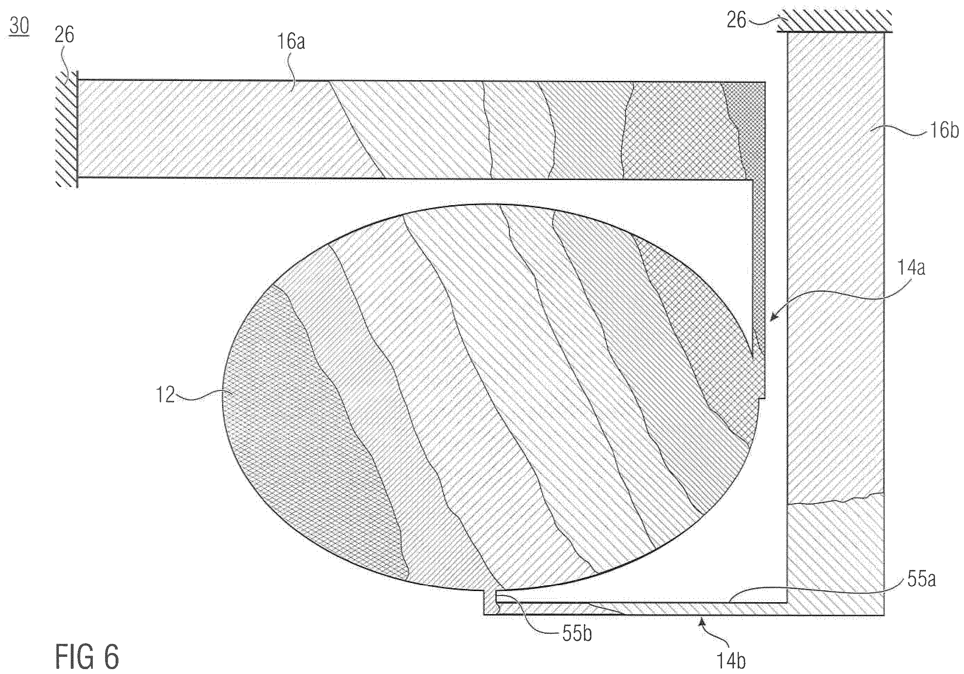

Fig. 6 zeigt eine Vorrichtung 30, mit einem optischen Element 12, das über die Federn 14a und 14b an den Aktuatoren 16a und 16b verkippbar angeordnet ist, wobei die Erstreckungsrichtungen der Aktuatoren 16a und 16b senkrecht zu einander angeordnet sind.

Die Feder 14b umfasst zwei jeweils gerade ausgeformte Abschnitte 55a und 55b, wobei der Abschnitt 55a relativ zum Abschnitt 55b lang ausgeformt ist und in etwa 97 % der gesamten Ausdehnung und der Abschnitt 55b in etwa 3 % der gesamten Ausdehnung entlang der Feder umfasst

Eine Kombination mehrerer unterschiedlich langer axialer Abschnitte erlaubt eine effiziente Einleitung von Torsionsmomenten in die Feder.

Alternative Ausführungsbeispiele zeigen Federn, welche mehr als zwei und maximal sechs gerade Abschnitte umfassen, wobei die Abschnitte eine individuelle und ein Abschnitt ausgebildet ist, der zumindest 80 % der gesamten axialen Ausdehnung des Federverlaufs umfasst und wobei jeder der kürzeren Abschnitte einen maximalen Anteil von 4 % des axialen Verlaufs der jeweiligen Feder umfasst.

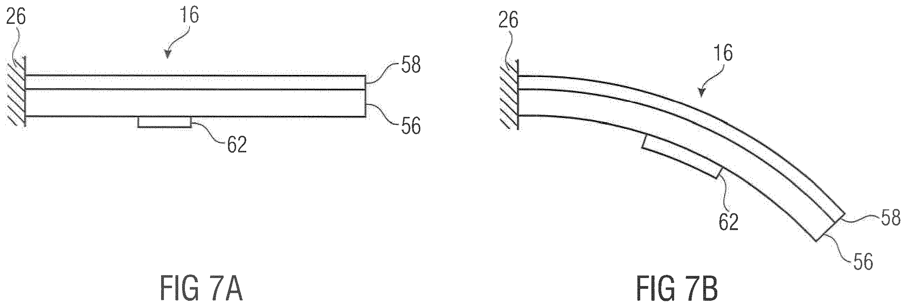

Fig. 7a zeigt eine Seitenansicht eines Aktuators 16 in einem unausgelenkten Zustand. Der Aktuator 16 umfasst ein Substrat 56 und eine thermische Funktionsschicht 58, welche über eine axiale Ausdehnung von der festen Einspannung 26 ausgehend hin zu einem auslenkbaren Ende des Aktuators 16 an dem Substrat 56 angeordnet ist. Die Funktionsschicht 58 ist ausgebildet ist um bei einer Erwärmung eine vom Substrat 56 verschiedene Ausdehnung aufzuweisen, so dass ein der festen Einspannung 26 gegenüberliegendes Ende des Aktuators 16 ausgelenkt wird. An einer der Funktionsschicht 58 abgewandten Seite des Substrates 56 ist ein Dehnungsmessstreifen 62 angeordnet, welcher ausgebildet ist, um eine Auslenkung des Aktuators 16 zu erfassen und die erfasste Auslenkung in Form eines Signals bereitzustellen.

Fig. 7b zeigt den Aktuator 16 in einem ausgelenkten Zustand, in welchem eine Expansion der Funktionsschicht 58 zu einer Stauchung des Dehnungsmessstreifens 62 führt.

In alternativen Ausführungsbeispielen umfasst die Funktionsschicht piezoelektrische Materialien, die ausgebildet sind, um bei Anlegen einer elektrischen Spannung eine Kontraktion oder eine Expansion zu erfahren und den Aktuator aufgrund der Kontraktion oder Ausdehnung auszulenken.

Je nach Betriebszustand der Aktuatoren und mithin je nach erwarteter Materialbelastung können auch andere Messverfahren zur Erfassung des Auslenkungszustandes an den Aktuatoren angeordnet sein, beispielsweise Bragg-Gitter, welche in faseroptischen Sensoren eingebracht sind.

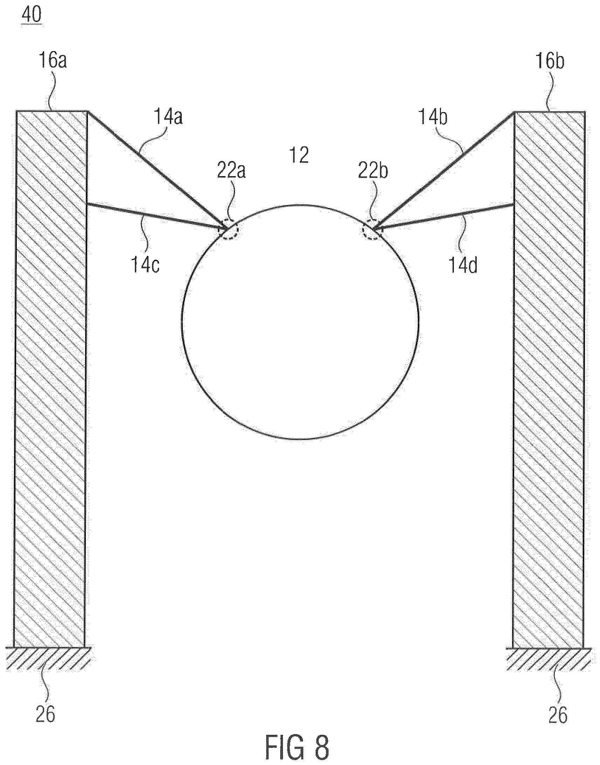

Fig. 8 zeigt eine schematische Aufsicht auf eine Vorrichtung 40 analog Vorrichtung 10 aus Fig. 1, bei der eine zusätzliche Feder 14c zwischen dem Aktuator 16a und dem optischen Element 12 und eine zusätzliche Feder 14d zwischen dem Aktuator 16b und dem optischen Element 12 angeordnet ist, wobei die Federn 14a und 14c sowie 14b und 14d jeweils paarweise an den optikseitigen Anbringungsbereichen 22a und 22b angeordnet sind, so dass die Anzahl der Stützpunkte am optischen Element 12 unverändert ist, wobei die Federn 14a-d jeweils eine gleiche laterale Ausdehnung umfassen.

Eine Anordnung mehrerer Federn erlaubt eine effizientere Übertragung einer Aktuatorauslenkung an das optische Element oder eine zusätzliche Stabilisierung einer Position des optischen Elementes, so dass gewichtsbedingte Auslenkungen des optischen Elementes reduziert sind.

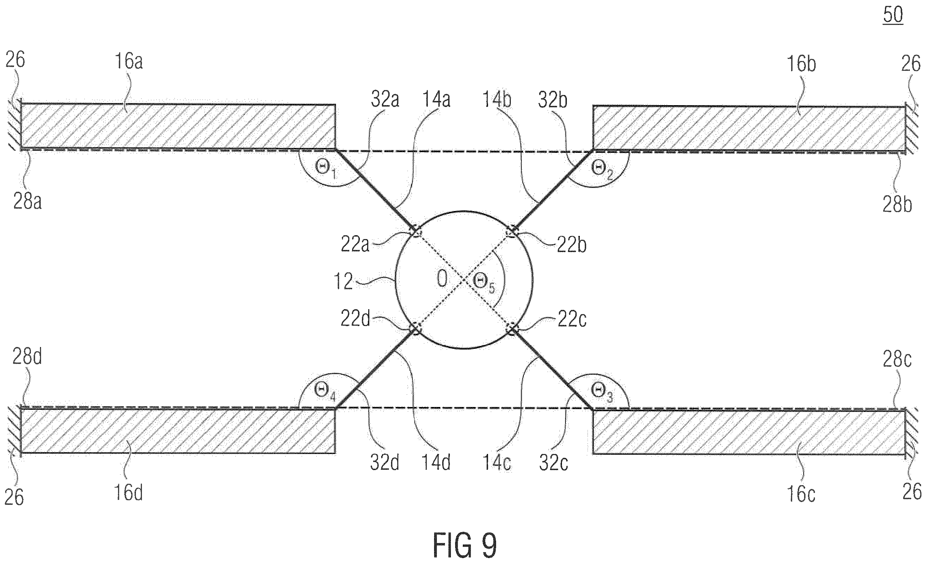

Fig. 9 zeigt eine Aufsicht auf eine erfindungsgemäße Vorrichtung 50 mit vier Aktuatoren 16a-d, an denen über vier Federn 14a-d das optische Element 12 um die beiden Torsionsachsen 18a und 18b verkippbar aufgehängt ist. Die Federn 14a-d sind an vier optikseitigen Anbringungsbereichen 22a-d mit dem optischen Element 12 verbunden. Der Aktuatorverlauf 28a-d eines Aktuators 16a-d bildet mit dem Federverlauf 32a-d einer am jeweiligen Aktuator 16a-d angeordneten Feder 14a-d einen Winkel $\theta_1$, $\theta_2$, $\theta_3$ bzw. $\theta_4$. Die Aktuatoren 16a-d sind derart angeordnet, dass die Verläufe 28a und 28d sowie die Verläufe 28b und 28c parallel zueinander verlaufen und der Verlauf 28a deckungsgleich mit dem Verlauf 28b sowie der Verlauf 28d deckungsgleich mit dem Verlauf 28c angeordnet ist. Die Winkel $\theta_{1-4}$ definieren die Lage der Torsionsachsen 18a und 18b, wobei sich die beiden Torsionsachsen 18a und 18b mit einem Winkel $\theta_5$ schneiden und der Winkel $\theta_5$ durch die Gleichung

$$\theta_5 = 360° - (\theta_3 + \theta_4)$$

bestimmt ist, sodass die Richtungen, in welche sich das optische Element 12 auslenkbar ist, geometrisch durch die Anordnung der Federn 14a-d bezüglich der Aktuatoren 16a-d und des optischen Elementes 12 definierbar ist.

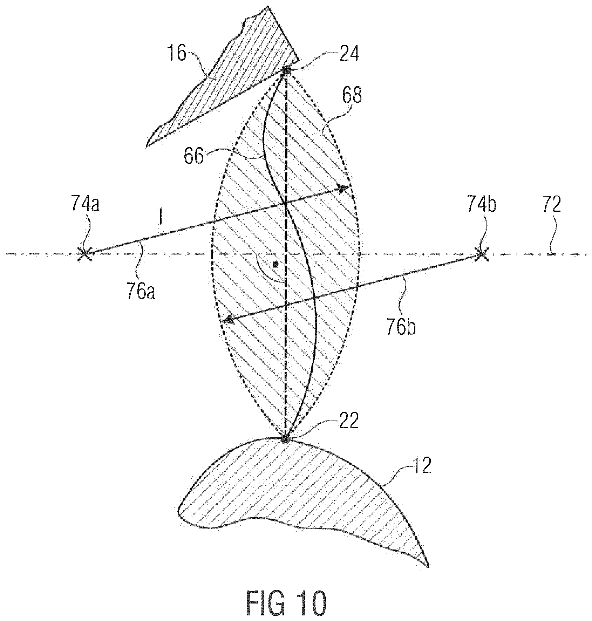

Fig. 10 zeigt eine Aufsicht auf eine Feder 66, gemäß der vorliegenden Erfindung, die einen gekrümmten Verlauf umfasst. Der gekrümmte Verlauf ist dabei derart ausgebildet, dass die Feder innerhalb eines Federbereichs 68 ausgebildet ist, wobei der Federbereich 68 durch einen Überlappungsbereich zweier Kreisbögen definiert ist. Zwischen dem aktuatorseitigen Anbringungsbereich 24 und dem optikseitigen Anbringungsbereich 22 ist eine Achse 72 angeordnet, welche eine Verbindungslinie zwischen den Anbringungsbereichen 24 und 22 in einem rechten Winkel schneidet. Die Linie 72 umfasst Kreisbogenmittelpunkte 74a und 74b, um die Kreisbögen derart mit einem Radius 76a und 76b angeordnet sind, dass die jeweiligen Kreisbögen die beiden Anbringungsbereiche 24 und 22 schneiden und wobei der Radius 76a bzw. 76b des jeweiligen Kreisbogens größer ist, als 75 % des Abstandes der beiden Anbringungsbereiche 24 und 22 zueinander.

Gekrümmte Federn ermöglichen eine Verringerung von durch Torsionen induziertem Materialstress, so dass eine größere Lebensdauer der Vorrichtung erzielbar ist.

Alternativ zu vorangegangenen Ausführungsbeispielen, die Federn zeigen, die über den Federverlaufhinweg eine konstante laterale Ausdehnung umfassen, zeigen alternative Ausführungsbeispiele Vorrichtungen mit Federn, die eine über den Federverlauf variierende laterale Ausdehnung umfassen, wie es nachfolgend gezeigt ist.

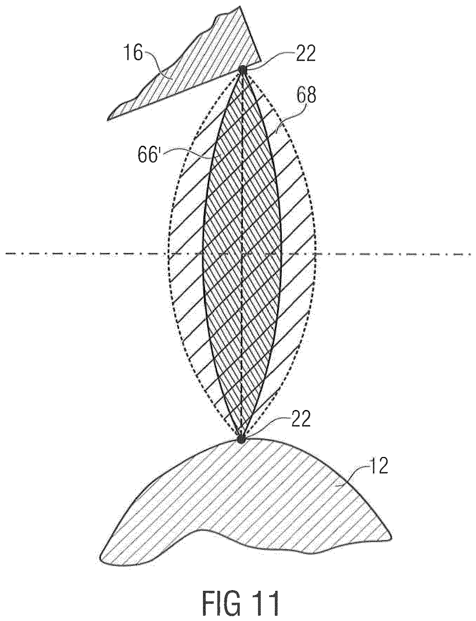

Fig. 11 zeigt eine Aufsicht auf eine Feder 66', gemäß der vorliegenden Erfindung, mit einer variierenden lateralen Ausdehnung über einen axialen Verlauf vom optikseitigen Anbringungsbereich 22 hin zum aktuatorseitigen Anbringungsbereich 24. Die Feder 66' ist innerhalb des Bereichs 68 ausgebildet, so dass ein gekrümmter Verlauf einer Feder 66 aus Fig. 10 von der Feder 66' umfasst ist.

Eine variierende laterale Ausdehnung erlaubt eine definierte Aufnahme von Verfonnungsenergie über den axialen Verlauf der Feder hin.

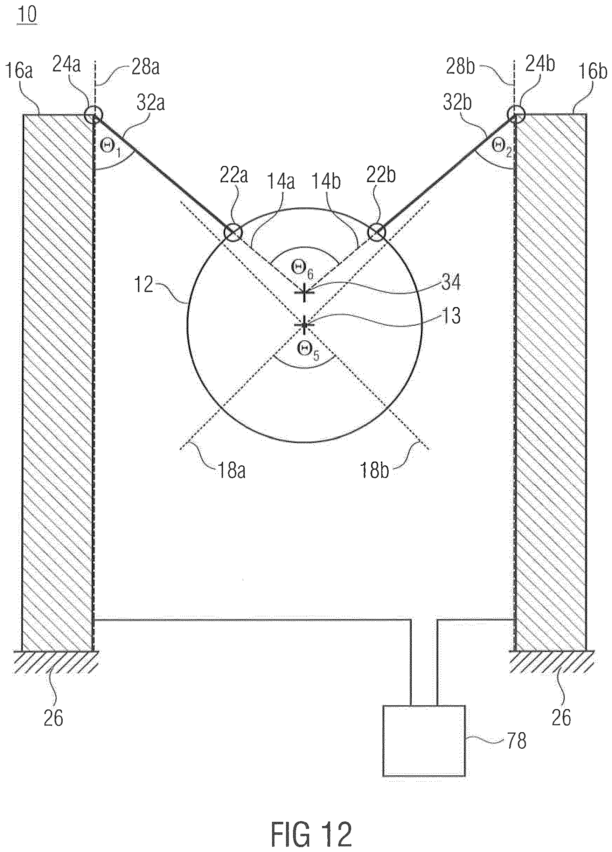

Fig. 12 zeigt Vorrichtung 10 aus Fig. 1, mit einer Steuereinrichtung 78, die ausgebildet ist, um die Aktuatoren 16a und 16b anzusteuern und eine Auslenkung der Aktuatoren 16a und 16b zu bewirken, so dass das optische Element 12 eine Verkippung erfährt.

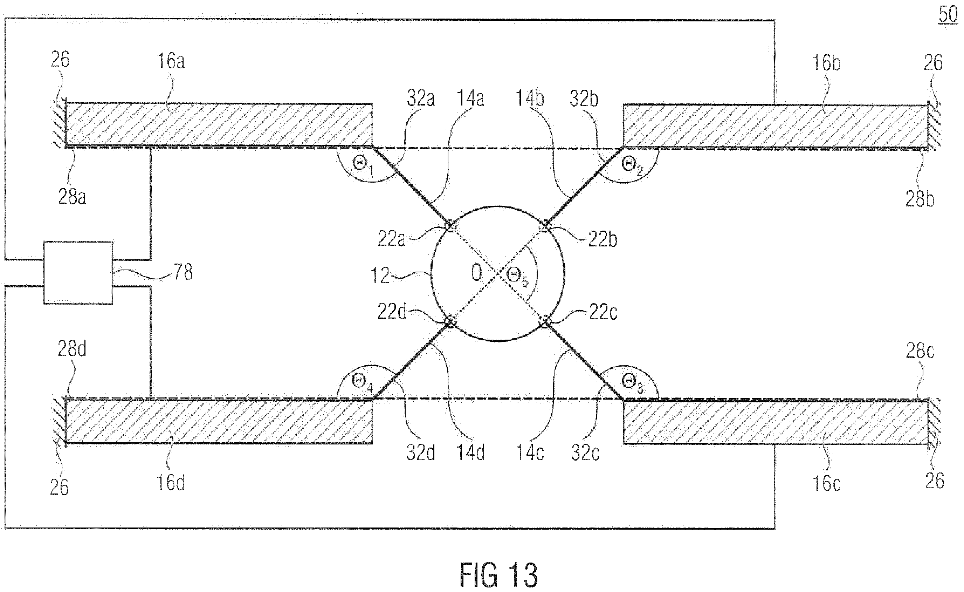

Fig. 13 zeigt Vorrichtung 50 aus Fig. 9, mit einer Steuereinrichtung 78, die ausgebildet ist, um die Aktuatoren 16a-d anzusteuern und eine Auslenkung der Aktuatoren 16a-dzu bewirken, so dass das optische Element 12 eine Verkippung erfährt.

Obwohl in vorangegangen Ausführungsbeispielen das optische Elemente stets rund ausgeformt ist, kann das optische Element eine beliebige Form umfassen, beispielsweise elliptisch oder viereckig.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Literatur

[1] Umer Izhar, Boon S. Ooi, Svetlana Tatic-Lucic, Multi-axis micromirror for optical coherence tomography, Procedia Cemistry, Volume 1, Issue 1, September 2009, Seiten 1.147-1.150

**Patentansprüche**

1. Vorrichtung, mit:

einem ersten Aktuator (16; 16a-d);
einem zweiten Aktuator (16; 16a-d);
einem dritten Aktuator (16; 16a-d);
einem vierten Aktuator (16; 16a-d);
einem optischen Element (12);
zumindest einer ersten Feder (14a-d; 66; 66'), die zwischen dem ersten Aktuator (16; 16a-d) an einem aktuatorseitigen Anbringungsbereich (24a)
und einem dem ersten Aktuator (16a) zugeordneten ersten optikseitigen Anbringungsbereich (22a) an einem Umfang des optischen Elements (12) angeordnet ist;
zumindest einer zweiten Feder (14a-d; 66; 66'), die zwischen dem zweiten Aktuator (16; 16a-d) an einem aktuatorseitigen Anbringungsbereich (24a)
und einem dem zweiten Aktuator (16b) zugeordneten zweiten optikseitigen Anbringungsbereich (22b) an dem Umfang des optischen Elements (12) angeordnet ist;
zumindest einer dritten Feder (14a-d; 66; 66'), die zwischen dem dritten Aktuator (16; 16a-d) an einem aktuatorseitigen Anbringungsbereich (24a)
und einem dem dritten Aktuator (16c) zugeordneten dritten optikseitigen Anbringungsbereich (22c) an dem Umfang des optischen Elements (12) angeordnet ist; und
zumindest einer vierten Feder (14a-d; 66; 66'), die zwischen dem vierten Aktuator (16; 16a-d) an einem aktuatorseitigen Anbringungsbereich (24a)
und einem dem vierten Aktuator (16d) zugeordneten vierten optikseitigen Anbringungsbereich (22d) an dem Umfang des optischen Elements (12) angeordnet ist;
**dadurch gekennzeichnet, dass** jede der ersten bis vierten Federn (14a-d; 66; 66') unter einem Winkel ($\theta_{1-4}$)
zu der Erstreckungsrichtung des zugeordneten Aktuators (16; 16a-d), der größer ist als 90° und kleiner ist als 180°, angeordnet ist; und ferner ein Verlauf der Federn (14a-d; 66; 66') entlang eines axialen Verlaufs von einem optikseitigen Anbringungsbereich (22a-d) hin zum aktuatorseitigen Anbringungsbereich (24a-d) eine Krümmung umfasst; wobei

die Feder innerhalb eines Bereichs (68) verläuft, der durch Kreisbögen definiert ist, die das erste und das zweite Ende der Feder (14a-d; 66; 66') schneiden; wobei jeder Kreisbogen einen Radius (76a-b) umfasst, der größer ist als das 0,75-fache eines Abstandes zwischen dem ersten Ende und dem zweiten Ende der Feder (14a-d; 66; 66'); und wobei jeder Kreisbogen einen Mittelpunkt (74a-b) umfasst, der entlang einer Linie (72) positioniert ist, die senkrecht zu einer Geraden, die das erste Ende und das zweite Ende der Feder (14a-d; 66; 66') mit einander verbindet, im Raum positioniert ist.

2. Vorrichtung gemäß Anspruch 1, bei der Erstreckungsrichtungen der ersten bis vierten Aktuatoren (16; 16a-d) von einer jeweiligen Einspannung (26) ausgehend eine gleiche oder entgegengesetzte Richtung zu einander umfassen.

3. Vorrichtung gemäß Anspruch 1 oder 2, bei der die optikseitigen Anbringungsbereich (22; 22a-d) eine laterale Ausdehnung entlang eines Umfangs einer Hauptseite des optischen Elementes (12) umfassen, die kleiner ist als der Umfang der Hauptseitenebene multipliziert mit dem Faktor 0,1.

4. Vorrichtung gemäß einem der vorangehenden Ansprüche, bei der einer der Aktuatoren (16; 16a-d) ein Piezoelement umfasst, das ausgebildet ist, den Aktuator (16; 16a-d) aus einer Ruhelage auszulenken.

5. Vorrichtung gemäß einem der vorangehenden Ansprüche, bei der einer der Aktuatoren (16; 16a-d) ein thermisches Stellglied (58) umfasst, das ausgebildet ist, den Aktuator (16; 16a-d) aus einer Ruhelage auszulenken.

6. Vorrichtung gemäß einem der vorangehenden Ansprüche, bei der einer der Aktuatoren (16; 16a-d) zumindest ein erstes und ein zweites Aktuatorelement (54a-d) umfasst.

7. Vorrichtung gemäß Anspruch 6, bei der das erste und das zweite Aktuatorelement (54a-d) gemeinsam ansteuerbar sind.

8. Vorrichtung gemäß einem der vorangehenden Ansprüche, bei der eine axiale Ausdehnung entlang der Erstreckungsrichtung eines Aktuators (16; 16a-d) größer ist als die größte Entfernung zweier beliebiger Punkte der Hauptseite des optischen Elementes (12) und kleinergleich dem fünffachen der größten Entfernung zweier beliebiger Punkte der Hauptseite des optischen Elementes (12).

9. Vorrichtung gemäß einem der vorangehenden Ansprüche, bei der ein Abstand zwischen einem ersten Ende und einem zweiten Ende der Feder (14a-d; 66; 66') kleiner ist als die mit dem Faktor 2 multiplizierte größte Entfernung zweier beliebiger Punkte einer Hauptseite des optischen Elementes (12).

10. Vorrichtung gemäß einem der vorangehenden Ansprüche, bei der jede der Federn (14a-d; 66; 66') eine über den axialen Verlauf ($x_1$) konstante laterale Ausdehnung umfasst.

11. Vorrichtung gemäß Anspruch 10, bei der die laterale Ausdehnung ($x_2$) kleiner ist, als die axiale Ausdehnung ($x_1$) multipliziert mit dem Faktor 0,3.

12. Vorrichtung gemäß einem der Ansprüche 1 bis 9, bei der die laterale Ausdehnung ($x_2$) jeder Feder (14a-d; 66; 66') über den axialen Verlauf der variiert.

13. Vorrichtung gemäß einem der vorangehenden Ansprüche, bei der an einem optikseitigen Anbringungsbereich (22; 22a-d) zumindest eine weitere Feder (14a-d; 66; 66') angeordnet ist und jede der Federn (14a-d; 66; 66') eine gleiche laterale Ausdehnung ($x_2$) umfasst.

14. Vorrichtung gemäß einem der vorangehenden Ansprüche, bei der an einem Aktuator (16; 16a-d) ein Messelement (62) angeordnet ist, das ausgebildet ist, den Auslenkungszustand des Aktuators (16; 16a-d) zu erfassen.

**Claims**

1. An apparatus, comprising:

a first actuator (16; 16a-d);
a second actuator (16; 16a-d);
a third actuator (16; 16a-d);
a fourth actuator (16; 16a-d);
an optical element (12);
at least one first spring (14a-d; 66; 66') disposed between the first actuator (16; 16a-d) at an actuator-side attachment area (24a) and a first optics-side attachment area (22a), associated to the first actuator (16a), at a circumference of the optical element (12);
at least one second spring (14a-d; 66; 66') disposed between the second actuator (16; 16a-d) at an actuator-side attachment area (24a) and a second optics-side attachment area (22b), associated to the second actuator (16b), at the circumference of the optical element (12);

at least one third spring (14a-d; 66; 66') disposed between the third actuator (16; 16a-d) at an actuator-side attachment area (24a) and a third optics-side attachment area (22c), associated to the third actuator (16c), at the circumference of the optical element (12); and

at least one fourth spring (14a-d; 66; 66') disposed between the fourth actuator (16; 16a-d) at an actuator-side attachment area (24a) and a fourth optics-side attachment area (22d), associated to the fourth actuator (16d), at the circumference of the optical element (12);

**characterized in that** each of the first to fourth springs (14a-d; 66; 66') is disposed at an angle ($\theta_{1-4}$) to the extension direction of the allocated actuators (16; 16a-d) that is greater than 90° and less than 180°; and furthermore

a course of the springs (14a-d; 66; 66') includes a curvature along an axial expansion from an optics-side attachment area (22a-d) towards the actuator-side attachment area (24a-d); wherein

the spring runs within an area (68) defined by circular arcs intersecting the first and the second end of the spring (14a-d; 66; 66'); wherein

each circular arc includes a radius (76a-b) that is greater than 0.75 times a distance between the first end and the second end of the spring (14a-d; 66; 66'); and wherein each circular arc includes a center (74a-b) positioned along a line (72) that is positioned in space perpendicular to a straight line connecting the first end and the second end of the spring (14a-d; 66; 66') to one another.

2. The apparatus according to claim 1, wherein expansion directions of the first to fourth actuators (16; 16a-d) starting from a respective fixing (26) include a same or opposite direction to one another.

3. The apparatus according to claim 1 or 2, wherein the optics-side attachment areas (22; 22a-d) include a lateral expansion along a circumference of a main side of the optical element (12) which is less than the circumference of the main side plane multiplied by the factor 0.1.

4. The apparatus according to any of the previous claims, wherein one of the actuators (16; 16a-d) includes a piezo element that is implemented to deflect the actuator (16; 16a-d) from a resting position.

5. The apparatus according to any of the previous claims, wherein one of the actuators (16; 16a-d) includes a thermal controlling element (58) that is implemented to deflect the actuator (16; 16a-d) from a resting position.

6. The apparatus according to any of the previous claims, wherein one of the actuators (16; 16a-d) includes at least a first and a second actuator element (54a-d).

7. The apparatus according to claim 6, wherein the first and the second actuator element (54a-d) can be controlled together.

8. The apparatus according to any of the previous claims, wherein an axial expansion along the extension direction of an actuator (16; 16a-d) is greater than the greatest distance of any two points of the main side of the optical element (12) and equal to or less than five times the greatest distance of any two points of the main side of the optical element (12).

9. The apparatus according to any of the previous claims, wherein a distance between a first end and a second end of the spring (14a-d; 66; 66') is less than the greatest distance of any two points of a main side of the optical element (12), multiplied by the factor 2.

10. The apparatus according to any of the previous claims, wherein each of the springs (14a-d; 66; 66') comprises a lateral expansion that is constant across the axial course ($x_1$).

11. The apparatus according to claim 10, wherein the lateral expansion ($x_2$) is less than the axial expansion ($x_1$) multiplied by the factor 0.3.

12. The apparatus according to any of claims 1 to 9, wherein the lateral expansion ($x_2$) of each spring (14a-d; 66; 66') varies across the axial course.

13. The apparatus according to any of the previous claims, wherein at least one further spring (14a-d; 66; 66') is disposed on an optics-side attachment area (22; 22a-d), and each of the springs (14a-d; 66; 66') comprises a same lateral expansion ($x_2$).

14. The apparatus according to any of the previous claims, wherein a measurement element (62) that is implemented to detect the deflection state of the actuator (16; 16a-d) is disposed on an actuator (16; 16a-d).

**Revendications**

1. Dispositif, avec:

un premier actionneur (16; 16a à d);

un deuxième actionneur (16; 16a à d);

un troisième actionneur (16; 16a à d);

un quatrième actionneur (16; 16a à d);

un élément optique (12);

au moins un premier ressort (14a à d; 66; 66') qui est disposé entre le premier actionneur (16; 16a à d) sur une zone de montage du côté de l'actionneur (24a) et une première zone de montage du côté de l'optique (22a) associée au premier actionneur (16a) sur une périphérie de l'élément optique (12);

au moins un deuxième ressort (14a à d; 66; 66') qui est disposé entre le deuxième actionneur (16; 16a à d) sur une zone de montage du côté de l'actionneur (24a) et une deuxième zone de montage du côté de l'optique (22b) associée au deuxième actionneur (16b) sur la périphérie de l'élément optique (12);

au moins un troisième ressort (14a à d; 66; 66') qui est disposé entre le troisième actionneur (16; 16a à d) sur une zone de montage du côté de l'actionneur (24a) et une troisième zone de montage du côté de l'optique (22c) associée au troisième actionneur (16c) sur la périphérie de l'élément optique (12); et

au moins un quatrième ressort (14a à d; 66; 66') qui est disposé entre le quatrième actionneur (16; 16a à d) sur une zone de montage du côté de l'actionneur (24a) et une quatrième zone de montage du côté de l'optique (22d) associée au quatrième actionneur (16d) sur la périphérie de l'élément optique (12);

**caractérisé par le fait que** chacun des premier à quatrième ressorts (14a à d; 66; 66') est disposé selon un angle $(\theta_{1-4})$ par rapport à la direction d'extension de l'actionneur associé (16; 16a à d) qui est supérieur à 90° et inférieur à 180°; et comporte par ailleurs

un parcours des ressorts (14a à d; 66; 66') le long d'un parcours axial d'une zone de montage du côté de l'optique (22a à d) vers la zone de montage du côté de l'actionneur (24a à d) comporte une courbure; où

le ressort s'étend dans une zone (68) qui est définie par des arcs de cercle qui viennent en intersection avec la première et la deuxième extrémité du ressort (14a à d; 66; 66'); où

chaque arc de cercle comporte un rayon (76a-b) qui est supérieur à 0,75 fois une distance entre la première extrémité et la deuxième extrémité du ressort (14a à d; 66; 66'); et où

chaque arc de cercle comporte un point central (74a-b) qui est positionné le long d'une ligne (72) qui est positionnée dans l'espace de manière perpendiculaire à une droite qui relie la première et la deuxième extrémité du ressort (14a à d; 66; 66').

2. Dispositif selon la revendication 1, dans lequel les directions d'extension des premier à quatrième actionneurs (16; 16a à d) comportent, en partant d'un serrage respectif (26), une même direction ou une direction opposée l'une à l'autre.

3. Dispositif selon la revendication 1 ou 2, dans lequel les zones de montage du côté de l'optique (22; 22a à d) comportent une extension latérale le long d'une périphérie d'une face principale de l'élément optique (12) qui est plus petite que la périphérie du plan latéral principal multipliée par le facteur 0,1.

4. Dispositif selon l'une des revendications précédentes, dans lequel un des actionneurs (16; 16a à d) comporte un élément piézoélectrique qui est conçu pour dévier l'actionneur (16; 16a à d) d'une position de repos.

5. Dispositif selon l'une des revendications précédentes, dans lequel un des actionneurs (16; 16a à d) comporte un élément d'actionnement thermique (58) qui est conçu pour dévier l'actionneur (16; 16a à d) d'une position de repos.

6. Dispositif selon l'une des revendications précédentes, dans lequel un des actionneurs (16; 16a à d) comporte au moins un premier et un deuxième élément actionneur (54a à d).

7. Dispositif selon la revendication 6, dans lequel le premier et le deuxième élément actionneur (54a à d) peuvent être commandés ensemble.

8. Dispositif selon l'une des revendications précédentes, dans lequel une extension axiale dans la direction d'extension d'un actionneur (16; 16a à d) est supérieure à la distance la plus grande de deux points quelconques de la face principale de l'élément optique (12) et inférieure ou égale à cinq fois la distance la plus grande de deux points quelconques de la face principale de l'élément optique (12).

9. Dispositif selon l'une des revendications précédentes, dans lequel une distance entre une première extrémité et une deuxième extrémité du ressort (14a à d; 66; 66') est inférieure à la distance la plus grande, multipliée par le facteur 2, de deux points quelconques d'une face principale de l'élément optique (12).

10. Dispositif selon l'une des revendications précédentes, dans lequel chacun des ressorts (14a à d; 66; 66') comporte une extension latérale constante sur l'extension axiale $(x_1)$.

**11.** Dispositif selon la revendication 10, dans lequel l'extension latérale ($x_2$) est inférieure à l'extension axiale ($x_1$) multipliée par le facteur 0,3.

**12.** Dispositif selon l'une des revendications 1 à 9, dans lequel l'extension latérale ($x_2$) de chaque ressort (14a à d; 66; 66') varie sur le parcours axial.

**13.** Dispositif selon l'une des revendications précédentes, dans lequel au moins un autre ressort (14a à d; 66; 66') est disposé sur une zone de montage du côté de l'optique (22; 22a à d) et chacun des ressorts (14a à d; 66; 66') comporte une même extension latérale (X2).

**14.** Dispositif selon l'une des revendications précédentes, dans lequel est disposé sur un actionneur (16; 16a à d) un élément de mesure (62) qui est conçu pour capturer l'état de déviation de l'actionneur (16; 16a à d).

FIG 1

FIG 2A

FIG 2B

FIG 3

EP 2 808 721 B1

FIG 4

FIG 5

FIG 6

EP 2 808 721 B1

FIG 7A

FIG 7B

40

16a          14a      12      14b          16b

22a          22b

14c          14d

26                              26

FIG 8

FIG 9

FIG 10

FIG 11

FIG 12

FIG 13

EP 2 808 721 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080165402 A1

**In der Beschreibung aufgeführte Nicht-Patentliteratur**

- **UMER IZHAR ; BOON S. OOI ; SVETLANA TAT-IC-LUCIC.** Multi-axis micromirror for optical coherence tomography. *Procedia Cemistry,* September 2009, vol. 1 (1), 1.147-1.150